# EUROPÄISCHE PATENTANMELDUNG

(11) **EP 1 495 929 A1**
(43) Veröffentlichungstag der Anmeldung: **12.01.2005**
(21) Anmeldenummer: 04011225.2
(22) Anmeldetag: 12.05.2004
(51) Int. Cl.: B60S 1/34

(54) **Wischerarm, insbesondere für ein Kraftfahrzeug**

(30) Priorität: 11.07.2003 DE 10331569
(71) Anmelder: ROBERT BOSCH GMBH, 70442 Stuttgart (DE)
(72) Erfinder: Gharbi, Sofiene, 76137 Karlsruhe (DE)

(57) **Zusammenfassung**

Es wird ein Wischerarm, insbesondere für ein Kraftfahrzeug vorgeschlagen, der ein Befestigungteil (12) umfasst, das drehfest an einer Wischerwelle befestigbar ist und ein freies Ende (17) aufweist, an dem ein Wischblatt anlenkbar ist. Erfindungsgemäß ist vorgeschlagen, dass das Befestigungteil (12) einen verformbaren Bereich (20) aufweist.

## Beschreibung

### Stand der Technik

Die Erfindungen betrifft einen Wischerarm sowie eine Scheibenwischvorrichtung, insbesondere für ein Kraftfahrzeug, nach dem Oberbegriff der unabhängigen Ansprüche.

Es sind schon zahlreiche Wischerarme bekannt, die ein Befestigungsteil aufweisen, das drehfest an einer Wischerwelle befestigbar ist. Diese Wischerarm weisen ein freies Ende auf, an dem ein Wischblatt anlenkbar ist.

Problematisch ist hierbei, das beim Aufprall eines Fußgängers auf die Wischerarme ein Verletzungsrisiko besteht, da der Fußgänger sich an den robusten Wischerarmen mit ihren Befestigungsteilen leicht verletzen kann.

Es wurde vorgeschlagen, die Motorhaube des Kraftfahrzeuges im Falle eines Aufpralls leicht anzuheben, um die Berührung des Fußgängers mit den Wischerarmen zu vermeiden. Derartige Lösungen sind jedoch aufwändig und teuer und daher für kleinere Fahrzeuge unpraktikabel.

### Vorteile der Erfindung

Der erfindungsgemäße Wischerarm mit den Merkmalen des Hauptanspruches hat den Vorteil, dass durch einen verformbaren Bereich am Befestigungsteil, dieses im Falle eines Aufpralls eines Fußgängers nachgiebig ausgestaltet ist. Damit vermindert sich das Verletzungsrisiko eines Fußgängers bei einem Aufprall auf die Wischerarme des Kraftfahrzeugs erheblich.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, wenn das Befestigungsteil ein Befestigungsauge aufweist, um es in einfacher Weise drehfest mit der Wischerwelle zu verbinden.

Weiterhin ist als vorteilhaft anzusehen, wenn der verformbare Bereich eine in montierter Position konkave Verformung des Wischerarm des zulässt. Auf diese Weise gibt der Wischerarm auch nach, wenn der Aufprall in der Mitte der Längserstreckung des Wischerarms stattfindet.

Ebenso vorteilhaft ist es, wenn der verformbare Bereich eine in montierter Position konvexe Verformung des Wischerarms zulässt, sodass der Wischerarm auch dann nach gibt wenn der Aufprall im Bereich des freien Endes des Wischerarms stattfindet.

In einer besonders einfachen und kostengünstigen Ausbildung ist der verformbare Bereich durch eine oder mehrere wellenartige Eindrückungen gebildet.

Hierbei ist es besonders vorteilhaft, wenn die Eindrückung im wesentlichen umlaufend angeordnet ist um eine Nachgiebigkeit in allen Raumrichtungen zu gewährleisten.

Eine besonders kostengünstige Ausführung wird durch eine Ausbildung des Befestigungsteils aus Blech erzielt. Besonders in der Serienfertigung ist dieser Kostenvorteil erheblich.

Besonders vorteilhaft ist es, wenn das Befestigungsteil in einem Stanz-Biege-Verfahren hergestellt ist, da dieses erprobt und für die Serienfertigung überaus geeignet ist.

Eine erfindungsgemäße Scheibenwischvorrichtung mit den Merkmalen des Anspruchs 9 hat den Vorteil, dass ein verbesserter Schutz für aufprallende Fußgänger beim Kontakt mit der Scheibenwischvorrichtung gegeben ist.

### Zeichnungen

Ein Ausführungsbeispiel der Erfindung ist in den Zeichnungen dargestellt und in der nachfolgenden Beschreibung näher erläutert. Es zeigen:
Figur 1, einen erfindungsgemäßen Wischerarm in einer Seitenansicht,
Figur 2, einen erfindungsgemäßen Wischerarm von unten betrachtet und
Figur 3, das Befestigungsteil in einer Schnittdarstellung.

### Beschreibung des Ausführungsbeispiels

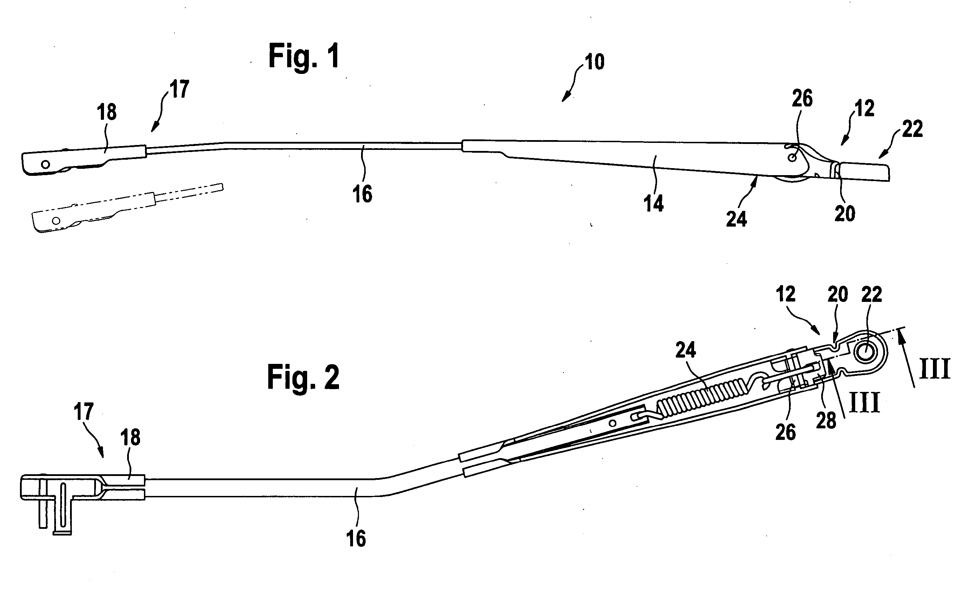

In Figur 1 ist ein erfindungsgemäßer Wischerarm 10 in einer Seitenansicht gezeigt. Dieser umfasst im wesentlichen ein Befestigungsteil 12, dass gelenkig mit einem Gelenkteil 14 verbunden ist. Das freie Ende des Gelenkteils 14 ist mit einer Stange 16 verbunden, welche an ihrem freien Ende 17 ein Befestigungselement 18 zum Befestigen eines nicht gezeichneten Wischblatts, insbesondere eines Flachbalken-Wischblatts aufweist.

Das Befestigungsteil 12 ist von im wesentlichen länglicher Gestalt und aus Blech in einem Stanz-Biege-Verfahren hergestellt. An einem Ende weist es einen ersten Abschnitt auf, der durch ein Befestigungsauge 22 gebildet ist. Das andere Ende 23 ist mit dem Gelenkteil 14 gelenkig verbunden und durch eine Zugfeder 24 verspannt. Etwa in der Mitte der Längserstreckung des Befestigungteils 12 ist eine Eindrückung 20 angeordnet, die von im wesentlichen wellenförmiger Gestalt ist und einen verformbaren Bereich bildet. Im Bereich des anderen Endes 23 ist das Befestigungsteil 12 im Querschnitt von im wesentlichen U-förmiger Gestalt und wird von einem Bolzen 26 durchgriffen.

Das Gelenkteil 14 umschmiegt das Befestigungteil 12 im Bereich seines anderen Endes 23 und weist Öffnungen zur Aufnahme des Bolzen 26 auf, sodass eine gelenkige Verbindung entsteht.

In Figur 2 ist der erfindungsgemäße Wischerarm aus Figur 1 von unten betrachtet dargestellt. Das Befestigungsteil 12 mit seiner länglicher Gestalt weist an einem Ende das Befestigungsauge 22 auf und ist mit seinem anderen Ende 23 mit dem Gelenkteil 14 verbunden. Der Bolzen 26 durchgreift das Gelenkteil 14 und das Befestigungsteil 12 in ganzer Breite. Die Zugfeder 24 ist an einer brückenartigen Lasche 28 eingehakt, die die beiden Schenkel des U-förmigen Befestigungsteils 14 überbrückt. Zwischen den beiden Enden des Befestigungsteil 12 ist die Eindrückung 20 angeordnet, die sich umlaufend um das gesamte U-förmige Befestigungsteil 12 erstreckt.

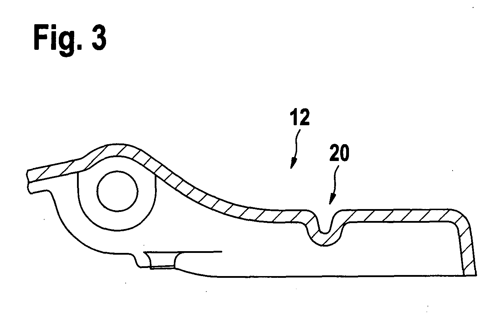

In Figur 3 ist das Befestigungsteil 12 in einem Längsschnitt dargestellt. Die wellenartige Eindrückung 20 ist zwischen dem Befestigungsauge 22 und dem anderen Ende 23 angeordnet und aus einer konkaven Wölbung gebildet. In einer alternativen Ausführungsform können natürlich auch mehrere Wölbungen vorgesehen sein, sodass ein ziehharmonikaartiger Effekt entsteht.

Durch die Eindrückung 20 ergibt sich eine Sollbiegestelle im Befestigungsteil 12. Dadurch ist der Wischerarm 10 bei einer plötzlichen Krafteinwirkung wie bei einem Aufprall eines Fußgängers nachgiebig, so dass die Verletzungsgefahr erheblich reduziert ist.

In einer weiteren alternativen Ausführungsform kann das Gelenkteil 14 und die Stange 16 natürlich auch einstückig ausgebildet sein, insbesondere auch mit dem Befestigungselement 18. In einer weiteren Variation kann der verformbare Bereich 20 auch auf andere Weise gebildet sein. Hier kann zum Beispiel eine Materialschwächung oder eine dünnere Ausgestaltung des Bleches vorgesehen sein, sodass eine leichtere Verformbarkeit gegeben ist.

## Patentansprüche

1. Wischerarm (10), insbesondere für ein Kraftfahrzeug, mit mindestens einem Befestigungsteil (12), das drehfest an einer Wischerwelle befestigbar ist und ein freies Ende (17) aufweist, an dem ein Wischblatt anlenkbar ist, **dadurch gekennzeichnet, dass** das Befestigungsteil (12) einen verformbaren Bereich (20) aufweist.

2. Wischerarm (10) nach Anspruch 1, **dadurch gekennzeichnet, dass** das Befestigungsteil (12) ein Befestigungsauge (22) aufweist.

3. Wischerarm (10) nach einem der vorhergehenden Ansprüche, **dadurch gekennzeichnet, dass** ver verformbare Bereich (20) eine in montierter Position konkave Verformung des Wischerarms (10) zulässt.

4. Wischerarm (10) nach einem der vorhergehenden Ansprüche, **dadurch gekennzeichnet, dass** ver verformbare Bereich (20) eine in montierter Position konvexe Verformung des Wischerarms (10) zulässt.

5. Wischerarm (10) nach einem der vorhergehenden Ansprüche, **dadurch gekennzeichnet, dass** der verformbare Bereich (20) durch mindestens eine wellenartige Eindrückung (20) gebildet ist.

6. Wischerarm (10) nach Anspruch 5, **dadurch gekennzeichnet, dass** die Eindrückung (20) im wesentlichen Umlaufend angeordnet ist.

7. Wischerarm (10) nach einem der vorhergehenden Ansprüche, **dadurch gekennzeichnet, dass** das Befestigungsteil (12) aus Blech ausgebildet ist.

8. Wischerarm ( 10) nach einem der vorhergehenden Ansprüche, **dadurch gekennzeichnet, dass** das Befestigungsteil (12) in einem Stanz-Biege-Verfahren hergestellt ist.

9. Scheibenwischvorrichtung, insbesondere für ein Kraftfahrzeug, **dadurch gekennzeichnet** das ein Wischerarm (10) gemäß einem der vorhergehenden Ansprüche vorgesehen ist.
